Europäisches Patentamt

European Patent Office

Office européen des brevets

(19)

(11) **EP 1 501 143 A1**

(12) **DEMANDE DE BREVET EUROPEEN**

(43) Date de publication:
**26.01.2005 Bulletin 2005/04**

(51) Int Cl.⁷: **H01M 8/02**, H01M 8/04,
H01M 8/24

(21) Numéro de dépôt: **04291840.9**

(22) Date de dépôt: **19.07.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **24.07.2003 FR 0309070**

(71) Demandeur: **Peugeot Citroen Automobiles S.A.**
**78140 Vélizy Villacoublay (FR)**

(72) Inventeurs:
• **Roy, Francis**
  **91940 Les Ulis (FR)**
• **Lee, Nicholas Robert Paul**
  **91430 Igny (FR)**
• **Glipa, Xavier**
  **91440 Bures sur Yvette (FR)**

(74) Mandataire: **Thinat, Michel**
**Cabinet Weinstein,**
**56 A, rue du Faubourg Saint-Honoré**
**75008 Paris (FR)**

(54) **Cellule de pile à combustible comprenant un système de distribution des gaz réactifs**

(57)     L'invention concerne une cellule de pile à combustible qui comprend un électrolyte (4) pris en sandwich entre deux couches actives respectivement anodique (3a) et cathodique (3c) qui sont chacune reliées électriquement à une plaque bipolaire respective anodique (5a) et cathodique (5c), dans laquelle le carburant et le comburant sont amenés au moins au niveau de la surface interne des plaques bipolaires respectives anodique (5a) et cathodique (5c), dans laquelle au moins un conduit d'acheminement du carburant (10a) est disposé entre la couche active anodique (3a) et la plaque bipolaire anodique (5a) et dans laquelle au moins un conduit d'acheminement du carburant (10c) est disposé entre la couche active cathodique (3c) et la plaque bipolaire cathodique (5c).

La pile à combustible ainsi obtenue peut permettre d'assurer, notamment, la traction d'un véhicule automobile.

EP 1 501 143 A1

# Description

L'invention concerne une pile à combustible et plus particulièrement une cellule de pile à combustible.

Une pile à combustible est un dispositif électrochimique qui permet de convertir l'énergie chimique en énergie électrique à partir d'un carburant, généralement l'hydrogène, et d'un comburant, l'oxygène ou un gaz contenant de l'oxygène tel que l'air, le seul produit de la réaction étant l'eau accompagné d'un dégagement de chaleur et d'une production d'électricité.

En effet, au sein de la pile à combustible, la réaction chimique globale résultant des réactions se produisant à l'anode et la cathode et sur lesquelles on reviendra plus tard est la suivante :

$$H_2 + \tfrac{1}{2}\, O_2 \rightarrow H_2O$$

Une pile à combustible peut être utilisée pour fournir l'énergie électrique à tout dispositif tel que par exemple un ordinateur, un téléphone portable mais elle peut être également utilisée pour assurer la traction d'un véhicule automobile et/ou l'alimentation des dispositifs électriques contenus dans un véhicule.

Une pile à combustible peut être constituée d'une ou de plusieurs cellules.

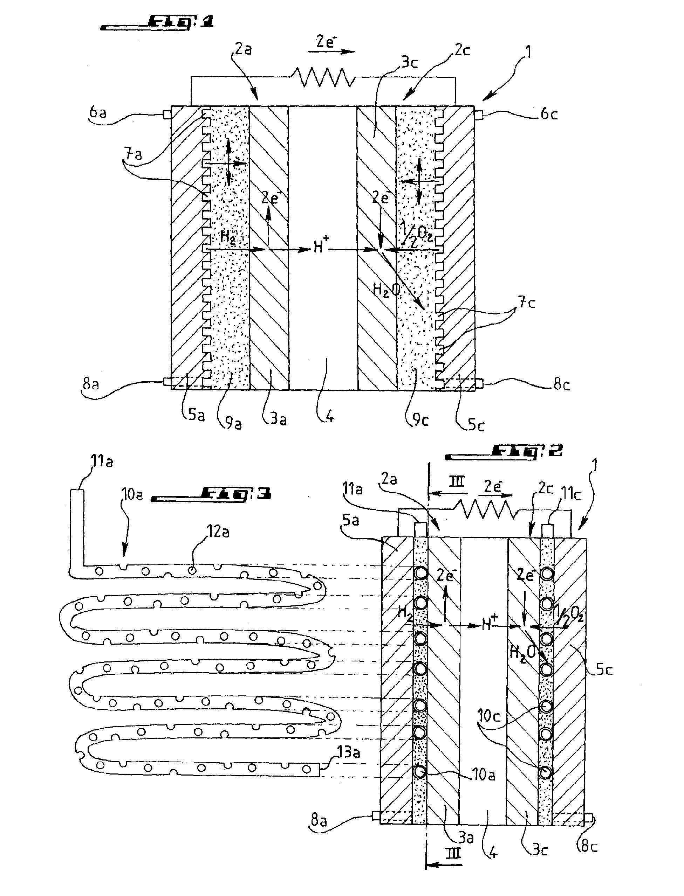

Pour décrire le principe de fonctionnement d'une pile à combustible de l'art antérieur, on se réfère à la figure 1 qui représente une coupe longitudinale d'une cellule d'une telle pile à combustible.

Comme une cellule d'une pile à combustible présente une symétrie de construction entre les compartiments anodique et cathodique, les éléments de ces deux parties qui ont la même fonction seront désignés, dans la description qui suit, par la même référence complétée, le cas échéant, par la lettre « a » pour les éléments relatifs au compartiment anodique et la lettre « c » pour les éléments relatifs au compartiment cathodique.

Une cellule de pile à combustible 1 comprend deux électrodes poreuses anodique 2a et cathodique 2c comprenant chacune une couche active 3a,3c qui sont le siège des réactions respectivement anodique et cathodique.

Les couches actives 3a et 3c sont de préférence réalisées en carbone poreux supportant un électrocatalyseur de platine.

Lorsque la couche active 3a de l'électrode anodique 2a est alimentée en hydrogène, la réaction qui se produit dans cette couche active 3a est la suivante :

$$H_2 \rightarrow 2e^- + 2H^+ \qquad\qquad (1)$$

Un électrolyte 4 est pris en sandwich entre les deux couches actives 3a et 3c et assure le transfert protonique de la couche active 3a vers la couche active 3c.

A cet effet, l'électrolyte peut être par exemple un électrolyte solide polymère, la pile résultante étant du type SPEFC (Solid Polymer Electrolyte Fuel Cell) ou plus particulièrement une membrane échangeuse de protons, la pile résultante étant une pile de type PEMFC (Proton Exchange Membrane Fuel Cell), ce dernier type de pile à combustible étant particulièrement intéressant pour la traction automobile à condition que l'on garantisse à la membrane une certaine humidité.

Dans le cas d'une pile PEMFC, la membrane peut être réalisée à base de polymères perfluorosulfonés.

La couche active 3c est alimentée en oxygène et la réaction qui se produit au niveau de cette couche active 3c est la suivante :

$$\tfrac{1}{2}\, O_2 + 2H^+ + 2e^- \rightarrow H_2O \qquad\qquad (2)$$

Chaque électrode poreuse anodique 2a et cathodique 2c comprend également une couche de diffusion respective 9a,9c qui est intercalée entre la couche active 3a, 3c et une plaque bipolaire 5a, 5c.

Les plaques bipolaires 5a, 5c sont réalisées en un matériau électriquement conducteur par exemple en métal, en graphite ou en composite polymère + graphite.

Ces plaques bipolaires 5a et 5c assurent notamment la collecte du courant résultant des réactions anodique et cathodique qui se produisent dans les couches actives 3a et 3c.

A cet effet et pour assurer la collecte du courant par les plaques bipolaires 5a,5c, les couches de diffusion 9a, 9c sont réalisées en un matériau électriquement conducteur et sont en contact avec les couches actives 3a,3c et les plaques bipolaires 5a,5c.

Le courant produit dans la cellule et collecté par les plaques bipolaires 5a,5c permet alors d'alimenter tout système nécessitant une telle alimentation.

Pour assurer le bon fonctionnement de la pile, le carburant doit atteindre la couche active 3a de l'électrode anodique 2a et le comburant doit atteindre la couche active 3c de l'électrode anodique 2c.

L'alimentation en carburant du coté anodique et en comburant du coté cathodique est un impératif de fonctionnement de la pile mais joue également un rôle en ce qui concerne ses performances.

En effet, on comprend que les performances de la pile dépendent des réactions qui se produisent à l'anode et à la cathode elles-mêmes dépendantes de l'alimentation en carburant et en comburant des couches actives respectives 3a et 3c.

Dans la pile de l'art antérieur de la figure 1, la distribution en carburant, par exemple l'hydrogène, au niveau de l'électrode poreuse anodique 2a et la distribution du comburant, l'oxygène, au niveau de l'électrode poreuse cathodique 2c sont assurées par les plaques bipolaires 5a et 5c au moyen d'une entrée de gaz respectivement 6a et 6c qui traverse la plaque correspondante 5a, 5c et d'une sortie de gaz respectivement 8a et 8c qui traverse également la plaque correspondante 5a, 5c mais aussi au moyen de canaux de distribution 7a,7b qui sont usinés dans les plaques bipolaires respectives 5a et 5c ou mis en forme par emboutissage d'une plaque métallique.

L'hydrogène et l'oxygène circulent ainsi dans les canaux de distribution respectifs 7a et 7c et se répandent dans les électrodes respectivement anodique 2a et cathodique 2c jusqu'aux couches actives anodique 3a et cathodique 3c.

Afin d'assurer une distribution homogène des gaz sur une surface maximum des couches actives 3a et 3b, les électrodes anodique 2a et cathodique 2c du dispositif de l'art antérieur doivent ainsi comporter chacune la couche de diffusion respectivement 9a et 9c qui est intercalée entre la plaque bipolaire 5a,5c et la couche active correspondante 2a,2c.

Dans ces conditions, les couches de diffusion 9a et 9c sont également réalisées en un matériau poreux tel que du tissu de carbone par exemple.

Ainsi, du coté anodique par exemple, l'hydrogène circule dans les canaux de distribution 7a vers la couche active 3a en traversant la couche de diffusion 9a, comme illustré par des flèches sur la figure 1, le même phénomène de diffusion de l'oxygène se produisant du coté cathodique.

Selon une autre cellule de pile à combustible également connue et non représentée, les couches de diffusion 9a,9c sont absentes et les gaz circulant dans les canaux de distribution 7a,7b atteignent la couche active respective 3a,3c uniquement au niveau de la surface de la couche active 3a,3c située en regard des canaux de distribution 7a,7b.

Au contraire, dans la cellule représentée sur la figure 1, l'hydrogène, ou de façon plus générale, le carburant, atteint alors de façon plus homogène toute la surface de la couche active 3a en contact avec la couche de diffusion 9a et de la même façon, l'oxygène atteint de façon plus homogène toute la surface de la couche active 3c en contact avec la couche de diffusion 9c, ce qui favorise les réactions dans les couches actives 3a,3c et augmente ainsi les performances de la pile par rapport à une pile ne comportant pas de couche de diffusion 9a,9a.

En outre, un système de distribution de fluide de refroidissement permettant de compenser le dégagement de chaleur résultant des réactions dans la pile peut être inséré dans la plaque bipolaire cathodique 5c.

Cependant, la pile à combustible représentée sur la figure 1 présente les inconvénients suivants.

Ainsi, l'usinage des canaux de distribution des gaz dans les plaques bipolaires 5a, 5c est une contrainte importante puisque d'une part, les opérations d'usinage de ces canaux dans les plaques bipolaires 5a,5c sont longues, délicates, complexes et coûteuses et d'autre part, elles imposent une épaisseur minimum aux plaques bipolaires, ce qui entraîne un encombrement et un poids excessif de la pile lorsqu'elle comprend plusieurs cellules.

Dans ce contexte, l'invention vise une pile à combustible permettant de pallier les inconvénients précités et présentant en outre des performances accrues en matière de production énergétique.

A cet effet, la cellule de pile à combustible de l'invention est essentiellement caractérisée en ce qu'au moins un conduit perforé d'acheminement du carburant 10a est disposé entre la couche active anodique 3a et la plaque bipolaire anodique 5a et en ce qu'au moins un conduit perforé d'acheminement du comburant 10c est disposé entre la couche active cathodique 3c et la plaque bipolaire cathodique 5c.

Ainsi, dans la pile de l'invention, il n'est pas nécessaire de réaliser des canaux de distribution dans les plaques bipolaires 5a et 5c, puisque ce sont les conduits perforés d'acheminement 10a,10c qui assurent la distribution des gaz réactifs.

Selon un premier mode de réalisation de l'invention, les conduits d'acheminement 10a, 10c ont chacun la forme d'un serpentin 10a,10c.

De préférence, chaque serpentin 10a, 10c présente une extrémité libre 13a, 13c et une extrémité opposée ouverte 11a, 11c permettant d'assurer l'entrée de gaz dans la cellule 1.

En outre, les extrémités libres 13a,13c des serpentins 10a, 10c peuvent être situées dans la cellule.

Il est également possible que les extrémités libres 13a, 13c soient fermées.

Selon un second mode de réalisation de l'invention, les conduits d'acheminement respectifs du carburant 10a et du comburant 10c présentent chacun au moins une extrémité libre 13a, 13c raccordée par son extrémité opposée respective 16a, 16c à au moins un collecteur commun transversal d'alimentation respectivement en carburant 17a et en comburant 17c.

Avantageusement, les collecteurs d'alimentation en carburant 17a et en comburant 17c sont fermés à une extrémité 19a, 19c et ouverts à l'extrémité opposée 18a, 18c afin d'assurer l'introduction du carburant et du comburant dans les conduits d'acheminement respectifs en carburant 10a et comburant 10c.

En outre, les extrémités libres 13a, 13c des conduits d'acheminement du carburant 10a et du comburant 10c peuvent être situés dans la cellule 1.

De façon très avantageuse, une couche poreuse anodique électriquement conductrice 14a est intercalée entre la couche active anodique 3a et la plaque bipolaire anodique 5a en formant entre ces deux dernières au moins une cavité 15a et en étant reliée électriquement à la plaque bipolaire 5a, une couche poreuse cathodique électriquement conductrice 14c est intercalée entre la couche active cathodique 3c et la plaque bipolaire cathodique 5c en formant entre ces deux dernières au moins une cavité 15c et en étant reliée électriquement à la plaque bipolaire 5c, en ce que le conduit d'acheminement en carburant 10a est disposé dans au moins une cavité correspondante 15a et le conduit d'acheminement en comburant 10c est disposé dans au moins une cavité correspondante 15c.

De préférence, les couches poreuses respectivement anodique 14a et cathodique 14c sont des grilles métalliques 14a, 14c.

Avantageusement, ces grilles métalliques peuvent présenter, en section transversale perpendiculaire aux plaques bipolaires 5a,5c, une forme ondulée de type sinusoïdale dont les ondes éloignés des plaques bipolaires respectives 5a, 5c définissent les cavités de logement 15a, 15c des conduits d'acheminement en carburant 10a et en comburant 10c et les couches actives respectives anodique 3a et cathodique 3c reposent sur les grilles métalliques correspondantes 14a, 14c.

Avantageusement, les grilles métalliques ondulées 14a, 14c sont réalisées en un matériau relativement souple et les conduits d'acheminement respectifs en carburant 10a et en comburant 10c sont disposés dans leurs ondulations respectives de façon à maintenir les grilles métalliques 14a, 14c dans leur position ondulée.

En outre, les couches poreuses 10a,10c, les couches actives 3a,3c et l'électrolyte 4 peuvent être encapsulés dans un boîtier isolant et hermétique 13 sur lequel sont fixés les collecteurs communs d'alimentation en carburant 17a et en comburant 17c.

De préférence, les collecteurs commun d'alimentation 17a, 17c sont des tubes à section transversale circulaire.

Avantageusement, les conduits d'acheminement du carburant 10a et du comburant 10c sont des tubes à section transversale circulaire.

En outre, les extrémités libres (13a, 13c) peuvent être fermées.

Selon un autre mode de réalisation de l'invention, une grille métallique 14a est intercalée entre la couche active anodique 3a et la plaque bipolaire anodique 5a en étant reliée électriquement à la plaque bipolaire 5a, une grille métallique 14c est intercalée entre la couche active cathodique 3c et la plaque bipolaire cathodique 5c en étant reliée électriquement à la plaque bipolaire 5c et le conduit d'acheminement du carburant 10a fait partie constitutive de la grille 14a tout comme le conduit d'acheminement du carburant 10c qui fait partie constitutive de la grille 14c.

De préférence, les grilles métalliques 14a, 14c forment entre les couches actives respectivement anodique 3a et cathodique 3c et les plaques bipolaires respectivement anodique 5a et cathodique 5c en formant au moins une cavité 15a, 15c.

Avantageusement, les grilles métalliques 14a, 14c peuvent présenter en section transversale perpendiculaire aux plaques bipolaires 5a, 5c une forme ondulée de type sinusoïdale.

En outre, les tubes perforés 10a, 10c utilisés dans tous les modes de réalisation présentés ci-dessus peuvent être en acier inoxydable.

De préférence, le diamètre des tubes perforés 10a, 10c est d'environ 0,5 mm, en ce que les perforations 12a, 12c sont circulaires et présentent un diamètre d'environ 0,2 mm et en ce que les dites perforations 12a, 12c sont espacées les unes des autres d'environ 2 mm.

L'invention concerne également une pile à combustible comprenant au moins une cellule telle que décrite précédemment.

La pile à combustible de l'invention peut permettre d'assurer la traction d'un véhicule automobile et/ou l'alimentation des dispositifs électriques contenue dans ce véhicule.

La pile à combustible de l'invention peut également être utilisée pour des applications stationnaires et/ou des dispositifs mobiles.

L'invention sera mieux comprise et d'autres buts, avantages et caractéristiques de celle-ci apparaîtront plus clairement à la lecture de la description qui suit et qui est notamment faite au regard des dessins annexés et sur lesquels :

- la figure 1 est une coupe longitudinale d'une cellule de pile à combustible de l'art antérieur ;
- la figure 2 est une coupe longitudinale d'une cellule de pile à combustible de l'invention selon un premier mode de réalisation;
- la figure 3 représente une vue du conduit d'acheminement du carburant 10a seul suivant la ligne III-III représentée en figure 2 ;
- la figure 4 est une coupe longitudinale d'une cellule de pile à combustible de l'invention selon un second mode de réalisation;
- la figure 5 est une vue du conduit d'acheminement du carburant seul 10a et du collecteur commun d'alimentation en carburant 17a suivant la ligne V-V représentée en figure 4 ; et
- la figure 6 est une vue en perspective de la partie cathodique de la cellule de la pile de l'invention selon une variante du second mode de réalisation.

Les éléments ayant la même fonction dans la cellule de la pile de l'art antérieur représentée sur la figure 1 et dans la cellule de la pile de l'invention représentée sur les figures 2 à 6 porteront les mêmes références dans la description qui suit.

La cellule de la pile de l'invention selon les deux modes de réalisation comprend un électrolyte 4, des électrodes poreuses anodique 2a et cathodique 2c intercalées entre les plaques bipolaires 5a et 5c.

Les électrodes poreuses 2a, 2c comprennent chacune une couche active 3a, 3c entre lesquelles l'électrolyte 4 est pris en sandwich.

Des sorties de gaz 8a, 8c sont également prévues.

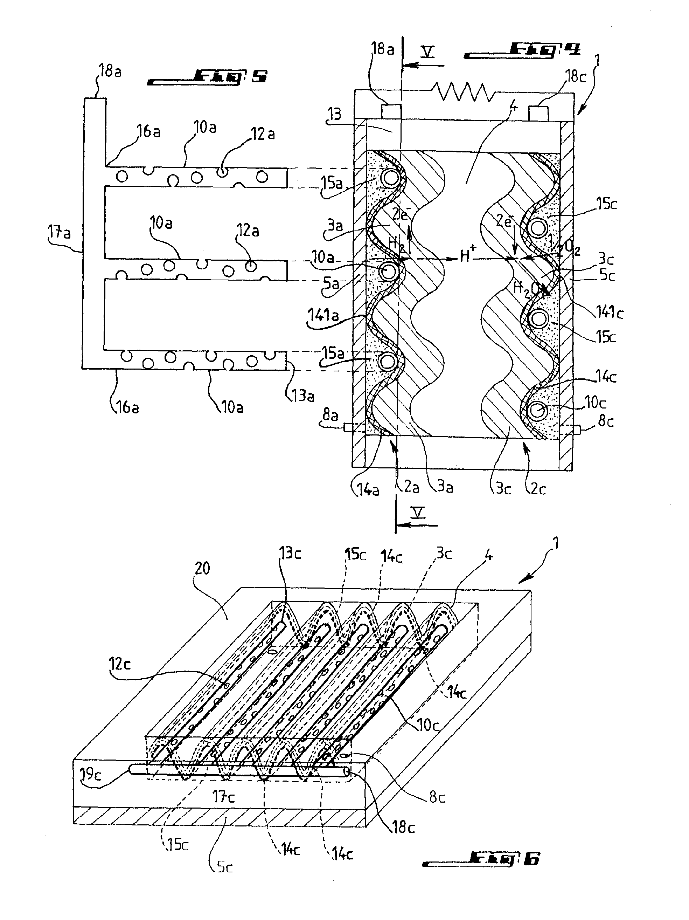

Selon le premier mode de réalisation représenté aux figures 2 et 3 la cellule de pile à combustible de l'invention comprend un conduit d'acheminement de carburant 10a disposé entre la couche active 3a et la plaque bipolaire 5a et, de la même façon, un conduit d'acheminement de comburant 10c disposé entre la couche active 3c et la plaque bipolaire5c.

Ces conduits d'acheminement 10a, 10c sont chacun en forme de serpentins comportant une extrémité ouverte 11a,11c qui traverse la cellule 1 et par laquelle le gaz correspondant, carburant ou comburant, est introduit, une extrémité opposée 13a, 13c qui peut être obturée et des perforations 12a, 12c réalisées le long du serpentin et traversées par le gaz réactif qui se répand alors de façon homogène dans la couche active correspondante 3a,3c et sur toute sa longueur de la cellule.

De préférence, les conduits d'acheminement 10a,10c sont des tubes à section transversale circulaire et présentent un diamètre d'approximativement 0,5 mm.

Avantageusement, les perforations 12a,12c sont circulaires et présentent un diamètre d'environ 0,2 mm.

Le conduit d'acheminement 10a,10c peut être réalisé en un matériau électriquement conducteur tel que de l'acier inoxydable, par exemple, ce qui permet d'assurer le contact électrique entre la couche active 3a, 3c et la plaque bipolaire 5a,5c lorsque la couche active 3a,3c n'est pas en contact avec cette plaque bipolaire correspondante 5a,5c conformément à la cellule de la figure 2.

Dans le cas où le conduit d'acheminement 10a, 10c est réalisé en un matériau électriquement conducteur, ce conduit 10a,10c peut être perforé par laser pour former des perforations circulaires 12a,12c.

Ces perforations 12a,12c peuvent être disposées régulièrement ou non sur le conduit d'acheminement 10a,10c.

Dans le cas où les perforations 12a, 12c sont régulièrement espacées les unes des autres le long du serpentin, elles peuvent être espacées d'environ 2 mm.

L'extrémité 13a, 13c de chaque conduit d'acheminement en serpentin 10a, 10c peut être située dans la cellule.

Selon le second mode de réalisation de la cellule représentée aux figures 4,5 et 6, une grille métallique 14a, 14c est disposée entre la plaque bipolaire 5a, 5c et la couche active 3a,3c.

Cette grille métallique 14a,14c présente en section transversale perpendiculaire aux plaques bipolaires 5a,5c, une forme ondulée en formant des cavités 15a,15c entre la plaque bipolaire 5a,5c et la grille 14a, 14c définies par les ondes éloignées des plaques bipolaires 5a, 5c.

La couche active 3a,3c repose sur toute la surface de la grille métallique 14a et 14c et présente ainsi une ondulation imposée par cette grille 14a,14c.

De la même façon, l'électrolyte 4 qui est pris en sandwich entre les deux couches actives 3a et 3c présente également une ondulation imposée par la géométrie ondulée des grilles métalliques 14a et 14c puisqu'il est préférable que l'électrolyte soit en contact avec toute la surface des couches actives 3a et 3c pour assurer au mieux le transfert protonique.

De préférence, l'ondulation de la grille métallique 14a,14c est de type sinusoïdale sur toute la longueur de la cellule 1.

La grille métallique 14a,14c peut être constituée par n'importe quelle couche poreuse réalisée en un matériau électriquement conducteur, à la fois suffisamment souple pour être replié mais également suffisamment solide pour supporter les couches actives 3a, 3c et l'électrolyte 4.

De plus, les grilles métalliques 14a et 14c peuvent présenter des repliements ou ondulations de géométrie différent la géométrie sinusoïdale décrite précédemment de toute géométrie puisque l'intérêt de la présence de telles grilles 14a, 14c est d'augmenter la surface des couches actives 3a,3c et ainsi d'augmenter également les performances de la pile résultante.

La cellule 1 comprend également un conduit perforé d'acheminement du carburant 10a qui est introduit dans chacune des cavités 15a formées par les ondes de la grille métallique 14a opposée à la plaque bipolaire 5a.

De la même façon du coté cathodique, un conduit perforé d'acheminement du comburant 10c est introduit dans chacune des cavités 15c formées par les ondes de la grille métallique 14c opposée à la plaque bipolaire 5c.

Comme dans le cas de la cellule de la pile de l'invention représentée en figure 2, les conduits d'acheminement 10a,10c sont de préférence des tubes à section transversale circulaire et peuvent présenter un diamètre d'approximativement 0,5 mm.

Avantageusement, les perforations 12a,12c de chaque conduit 10a, 10c sont circulaires et présentent un diamètre d'environ 0,2 mm.

Dans le cas où les perforations 12a,12c sont régulièrement disposées le long des conduits 10a, 10c, ces perforations 12a,12c sont, de préférence, espacées les unes des autres d'environ 2 mm.

La grille métallique 14a, 14c peut présenter des points de contact 141a,141c avec la plaque bipolaire correspondante 5a,5c.

Dans la cellule de ce second mode de réalisation, chaque grille métallique 14a, 14c présente des zones ou points de contact 141a, 141c avec la plaque bipolaire correspondante 5a, 5c ce qui permet à ces plaques 5a et 5c d'assurer leur fonction de collecteur de courant.

De préférence, ces points de contact 141a, 141c sont définis par les sommets des ondes directement en contact sur les plaques bipolaires 5a, 5c.

Dans ce cas, les conduits d'acheminement 10a, 10c peuvent être réalisés en un matériau isolant puisque le contact électrique entre les couches actives 3a, 3c et les plaques bipolaires 5a, 5c s'effectue par les points de contact 141a, 141c.

En revanche, il est possible que les grilles métalliques 14a, 14c ne soient pas en contact direct avec les plaques bipolaires 5a, 5c et dans ce cas, il est impératif que les conduits d'acheminement 10a, 10c soient réalisés en un matériau électriquement conducteur et soient en contact avec à la fois les plaques bipolaires 5a, 5c et les grilles métalliques 14a, 14c de façon à permettre la passage du courant des couches actives 3a, 3c aux plaques bipolaires 5a, 5c.

De préférence, le matériau électriquement conducteur utilisé pour fabriquer les conduits d'acheminement 10a, 10c est l'acier inoxydable.

Comme dans la cellule conforme au premier mode de réalisation, dans le cas où les conduits d'acheminement 10a, 10c sont réalisés en un matériau électriquement conducteur, ces conduits 10a, 10c peuvent être perforés par laser pour former des perforations circulaires 12a,12c.

De plus, chaque conduit d'acheminement 10a, 10c présente une extrémité libre 13a,13c qui peut être fermée et une extrémité opposée 16a,16c qui est raccordée à un collecteur commun d'alimentation transversal 17a,17c s'étendant tranversalement aux conduits d'acheminement 10a, 10c lorsque ces derniers s'étendent dans un même plan parallèlement les uns aux autres. De préférence, chque extrémité libre fermée d'un conduit 10a, 10c est situé dans la cellule 1.

Les collecteurs communs d'alimentation 17a, 17c sont de préférence des tubes de section transversale circulaire.

Comme représenté sur la figure 6, les collecteurs communs d'alimentation en carburant 17a et en comburant 17c sont de préférence fixés à l'extérieur de la cellule sur un boîtier isolant et hermétique 20 qui encapsule les grilles métalliques 14a,14c, les couches actives 3a,3c et l'électrolyte 4.

Les conduits d'acheminement 10a, 10c traversent le boîtier isolant 20 en étant disposés dans les cavités 15a,15c.

Les collecteurs communs d'alimentation en carburant 17a et en comburant 17c présentent chacun une extrémité ouverte 18a,18c par laquelle le gaz pénètre et une extrémité opposée fermée 19a,19c représentée sur la figure 6.

Ainsi, du coté anodique par exemple, le gaz circule dans le collecteur commun d'alimentation 17a puis dans les conduits d'acheminement 10a, ce qui permet d'alimenter de façon homogène en carburant chaque cavité 15a sur toute sa longueur.

Dans la cellule 1 représentée en figure 4, les conduits d'acheminement 10a, 10c peuvent assurer, en plus de la distribution du gaz, le maintien des grilles métalliques respectives 14a, 14c dans leur forme ondulée lorsque ces grilles 14a, 14c sont réalisées en un matériau relativement souple.

Mais, il est également possible, comme représenté en figure 6, que les conduits d'acheminement 10a,10c soient disposés dans les cavités 15a,15c sans contact ni avec les grilles métalliques 14a, 14c, ni avec les plaques bipolaires 5a, 5c. Comme expliqué précédemment, il est impératif, dans ce cas, que les grilles métalliques 14a, 14c soient en contact avec les plaques bipolaires 5a, 5c.

On peut également prévoir l'insertion des collecteurs communs d'alimentation 17a, 17c dans un espace prévu à cet effet dans la cellule 1 proprement dite.

Selon une variante de réalisation, le système constitué par les conduits d'acheminement 10a, 10c et leur collecteur commun d'alimentation respectif 17a, 17c peut être utilisé dans la cellule de la pile représentée sur la figure 2.

Dans ce cas, les collecteurs communs d'alimentation 17a, 17c peuvent être disposés dans la cellule et sont de préférence réalisés en un matériau électriquement conducteur pour que le conduits d'alimentation 10a, 10c puissent assurer, le cas échéant, le contact électrique entre les couches actives 3a, 3c et les plaques bipolaires 5a, 5c.

Il est également possible d'utiliser le conduit d'acheminement en serpentin 10a, 10c de la figure 3 dans la cellule représentée en figure 4 à condition d'adapter la configuration du serpentin à la configuration géométrique des grilles 14a, 14c.

De façon plus générale, le conduit d'acheminement 10a,10c peut présenter toute autre configuration de celle décrite précédemment dans les deux modes de réalisation, lui permettant d'assurer d'une part, la distribution homogène du gaz tout le long de la couche active correspondante 3a, 3c et d'autre part, le cas échéant, le contact électrique entre la couche active 3a, 3c et la plaque bipolaire 5a, 5c.

A cet effet, et selon un autre mode de réalisation non représenté sur les figures, les conduits d'acheminement en carburant 10a et en comburant 10c peuvent faire partie de la constitution des grilles métalliques respectives 14a, 14c.

Par exemple, les conduits 10a et 10c peuvent passer alternativement au travers des mailles des grilles 14a, 14c ou être soudés à ces grilles 14a, 14c.

De façon avantageuse, ces conduits 10a, 10c peuvent former tout ou partie des mailles de la grille 14a, 14c ce qui permet de s'affranchir de l'utilisation de conduits 10a, 10c en plus des grilles 14a, 14c.

La distribution homogène des gaz dans la couche active correspondante 3a,3c par ces conduits d'acheminement permet notamment de conserver la stoechiométrie de réaction dans toute la couche active 3a,3c et d'augmenter ainsi les performances de la pile résultante.

Aussi, grâce à la distribution uniforme des gaz dans les couches actives respectives 3a,3c, la densité de courant est la même en tout point dans les couches actives 3a, 3c, ce qui permet d'éviter la présence d'un gradient thermique au sein de la cellule, comme c'est le cas pour la pile de l'art antérieur présentée en figure 1.

L'utilisation des conduits d'acheminement 10a, 10c dans une cellule de pile à combustible permet également d'éviter l'usinage des canaux de distribution 7a, 7c dans les plaques bipolaires 5a, 5c, ce qui est très avantageux tant au niveau du coût de fabrication des plaques bipolaires que de l'encombrement de la pile résultante puisque l'épaisseur des plaques bipolaires 5a, 5c n'est plus imposée par la présence de ces canaux 7a, 7c.

De la sorte, le coût de la pile est également réduit puisque les couches de diffusion 9a, 9c de la cellule de la pile de l'art antérieur qui sont coûteuses sont avantageusement remplacées, dans la cellule de la pile de l'invention, par des conduits d'acheminement 10a, 10c moins coûteux et plus simples à fabriquer.

En ce qui concerne le carburant, il est possible d'utiliser de l'hydrogène pour alimenter l'anode, mais pour s'affranchir des contraintes liées au reformage et/ou au stockage de l'hydrogène, il est avantageusement possible d'alimenter directement l'anode de la pile avec un mélange d'eau et de méthanol (pile de type DMFC).

Enfin, dans le cas de la cellule représentée sur les figures 4 et 6, la présence conjointe des conduits d'acheminement 10a, 10c et des couches actives 3a, 3c à surface accrue permet d'augmenter fortement la puissance fournie par la pile par unité de poids de cette dernière.

**Revendications**

1. Cellule de pile à combustible qui comprend un électrolyte (4) pris en sandwich entre deux couches actives respectivement anodique (3a) et cathodique (3c) qui sont chacune reliées électriquement à une plaque bipolaire respective anodique (5a) et cathodique (5c), et dans laquelle le carburant et le comburant sont amenés au moins au niveau de la surface interne des plaques bipolaires respectives anodique (5a) et cathodique (5b) et sont évacués de la dite cellule, **caractérisée en ce qu'**au moins un conduit perforé d'acheminement du carburant (10a) est disposé entre la couche active anodique (3a) et la plaque bipolaire anodique (5a) et **en ce qu'**au moins un conduit perforé d'acheminement du comburant (10c) est disposé entre la couche active cathodique (3c) et la plaque bipolaire cathodique (5c).

2. Cellule de pile à combustible selon la revendication 1, **caractérisée en ce que** les conduits d'acheminement (10a, 10c) ont chacun la forme d'un serpentin (10a,10c).

3. Cellule de pile à combustible selon la revendication 2, **caractérisée en ce que** chaque serpentin (10a, 10c) présente une extrémité libre (13a, 13c) et une extrémité opposée ouverte (11a, 11c) permettant d'assurer l'entrée de gaz dans la cellule (1).

4. Cellule de pile à combustible selon la revendication 3, **caractérisée en ce que** les extrémités libres (13a,13c) des serpentins (10a, 10c) sont situées dans la cellule.

5. Cellule de pile à combustible selon l'une quelconque des revendications 3 ou 4, **caractérisé en ce que** les extrémités libres (13a, 13c) sont fermées.

6. Cellule de pile à combustible selon la revendication 1, **caractérisée en ce que** les conduits d'acheminement respectifs du carburant (10a) et du comburant (10c) présentent chacun au moins une extrémité libre (13a, 13c) raccordée par son extrémité opposée respective (16a, 16c) à au moins un collecteur commun transversal d'alimentation respectivement en carburant (17a) et en comburant (17c).

7. Cellule de pile à combustible selon la revendication 6, **caractérisée en ce que** les collecteurs d'alimentation en carburant (17a) et en comburant (17c) sont fermés à une extrémité (19a, 19c) et ouverts à l'extrémité opposée (18a, 18c) afin d'assurer l'introduction du carburant et du comburant dans les conduits d'acheminement respectifs en carburant (10a) et comburant (10c).

8. Cellule de pile à combustible selon la revendication 6 ou 7, **caractérisée en ce que** les extrémités libres (13a, 13c) des conduits d'acheminement du carburant (10a) et du comburant (10c) sont situés dans la cellule (1).

9. Cellule de pile à combustible selon l'une quelconque des revendications 6 à 8, **caractérisée en ce qu'**une couche poreuse anodique électriquement conductrice (14a) est intercalée entre la couche active anodique (3a) et la plaque bipolaire anodique (5a) en formant entre ces deux dernières au moins une cavité (15a) et en étant reliée électriquement à la plaque bipolaire (5a), **en ce qu'**une couche poreuse cathodique électriquement conductrice (14c) est intercalée entre la couche active cathodique (3c) et la plaque bipolaire cathodique (5c) en formant entre ces deux dernières au moins une cavité (15c) et en étant reliée électriquement à la plaque bipolaire (5c), **en ce que** le conduit d'acheminement en carburant (10a) est disposé dans au moins une cavité correspondante (15a) et **en ce que** le conduit d'acheminement en comburant (10c) est disposé dans au moins une cavité correspondante (15c).

10. Cellule de pile à combustible selon la revendication 9, **caractérisée en ce que** les couches poreuses respectivement anodique (14a) et cathodique (14c) sont des grilles métalliques (14a, 14c).

**11.** Cellule de pile à combustible selon la revendication 10, **caractérisé en ce que** les grilles métalliques (14a, 14c) présentent, en section transversale perpendiculaire aux plaques bipolaires (5a,5c), une forme ondulée de type sinusoïdale dont les ondes éloignés des plaques bipolaires respectives (5a, 5c) définissent les cavités de logement (15a, 15c) des conduits d'acheminement en carburant (10a) et en comburant (10c) et **en ce que** les couches actives respectives anodique (3a) et cathodique (3c) reposent sur les grilles métalliques correspondantes (14a, 14c)

**12.** Cellule de pile à combustible selon la revendication 11, **caractérisée en ce que** les grilles métalliques ondulées (14a, 14c) sont réalisées en un matériau relativement souple et les conduits d'acheminement respectifs en carburant (10a) et en comburant (10c) sont disposés dans leurs ondulations respectives de façon à maintenir les grilles métalliques (14a, 14c) dans leur position ondulée.

**13.** Cellule de pile à combustible selon l'une des revendications 6 à 12, **caractérisée en ce que** les couches poreuses (10a,10c), les couches actives (3a, 3c) et l'électrolyte (4) sont encapsulés dans un boîtier isolant et hermétique (13) sur lequel sont fixés les collecteurs communs d'alimentation en carburant (17a) et en comburant (17c).

**14.** Cellule de pile à combustible selon l'une des revendications 6 à 12, **caractérisée en ce que** les collecteurs commun d'alimentation (17a, 17c) sont des tubes à section transversale circulaire.

**15.** Cellule de pile à combustible selon l'une quelconque des revendications 6 à 14, **caractérisé en ce que** les extrémités libres (13a, 13c) sont fermées.

**16.** Cellule de pile à combustible selon la revendication 1, **caractérisé en ce qu'**une grille métallique (14a) est intercalée entre la couche active anodique (3a) et la plaque bipolaire anodique (5a) en étant reliée électriquement à la plaque bipolaire (5a), **en ce qu'**une grille métallique (14c) est intercalée entre la couche active cathodique (3c) et la plaque bipolaire cathodique (5c) en étant reliée électriquement à la plaque bipolaire (5c) et **en ce que** les conduits d'acheminement du carburant (10a) et du carburant (10c) font partie constitutive des grilles respectives (14a, 14c).

**17.** Cellule de pile à combustible selon la revendication 16, **caractérisé en ce que** les grilles métalliques (14a, 14c) forment entre les couches actives respectivement anodique (3a) et cathodique (3c) et les plaques bipolaires respectivement anodique (5a) et cathodique (5c) en formant au moins une cavité (15a, 15c).

**18.** Cellule de pile à combustible selon la revendication 17, **caractérisé en ce que** les grilles métalliques (14a, 14c) présentent en section transversale perpendiculaire aux plaques bipolaires (5a, 5c) une forme ondulée de type sinusoïdale.

**19.** Cellule de pile à combustible selon l'une quelconque des revendications précédentes, **caractérisée en ce que** les conduits d'acheminement du carburant (10a) et du comburant (10c) sont des tubes à section transversale circulaire.

**20.** Cellule de pile à combustible selon la revendication 19, **caractérisée en ce que** les tubes perforés (10a, 10c) sont en acier inoxydable.

**21.** Cellule de pile à combustible selon la revendication 19, **caractérisée en ce que** le diamètre des tubes perforés (10a, 10c) est d'environ 0,5 mm, **en ce que** les perforations (12a, 12c) sont circulaires et présentent un diamètre d'environ 0,2 mm et **en ce que** les dites perforations (12a, 12c) sont espacées les unes des autres d'environ 2 mm.

**22.** Pile à combustible comprenant au moins une cellule selon l'une des revendications précédentes.

**23.** Pile à combustible selon la revendication 17 utilisée pour assurer la traction d'un véhicule automobile et/ou l'alimentation des dispositifs électriques contenue dans ce véhicule.

**24.** Pile à combustible selon la revendication 22, utilisée pour des applications stationnaires et/ou des dispositifs mobiles.

Fig. 1

Fig. 2

Fig. 3

Fig 5

Fig 4

Fig 6

**Office européen**
**des brevets**

**RAPPORT DE RECHERCHE EUROPEENNE**

Numéro de la demande

EP 04 29 1840

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int.Cl.7) |
| Y | US 2003/039876 A1 (KNIGHTS S.D. ET AL.) 27 février 2003 (2003-02-27) P. 1, paragraphes [0010]-[0015]; P. 3, paragraphe [0041]; Revendication 1; Fig. 1-3 ----- | 1-24 | H01M8/02 H01M8/04 H01M8/24 |
| Y | US 6 296 964 B1 (THE REGENTS OF THE UNIVERSITY OF CALIFORNIA) 2 octobre 2001 (2001-10-02) Col. 2, lignes 17-32; Revendications 1-3; Fig. 1-4 ----- | 1-24 | |
| A | DE 199 05 564 A (FORSCHUNGZENTRUM JUELICH GMBH) 17 août 2000 (2000-08-17) Col. 2, lignes 1-9; Revendication 1; Fig. 1-2 ----- | 1-24 | |
| A | DE 198 53 911 A (FORSCHUNGZENTRUM JUELICH GMBH) 25 mai 2000 (2000-05-25) Col. 2, lignes 44-54; Revendication 1; Fig. 1-2 ----- | 1-24 | DOMAINES TECHNIQUES RECHERCHES (Int.Cl.7) |
| A | EP 1 235 289 A (GENERAL MOTORS CORPORATION) 28 août 2002 (2002-08-28) Col. 2, paragraphes [0008]-[0009]; Revendication 1; Fig. 1-8 ----- | 1-24 | H01M |
| A | EP 1 107 339 A (GENERAL MOTORS CORPORATION) 13 juin 2001 (2001-06-13) Col. 2-3, paragraphe [0006]; Revendication 1; Fig. 1-5 ----- | 1-24 | |

Le présent rapport a été établi pour toutes les revendications

| Lieu de la recherche | Date d'achèvement de la recherche | Examinateur |
|---|---|---|
| Munich | 29 septembre 2004 | Masson, J-P |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 04 29 1840

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2004

| Document brevet cité au rapport de recherche | | Date de publication | Membre(s) de la famille de brevet(s) | | Date de publication |
|---|---|---|---|---|---|
| US 2003039876 | A1 | 27-02-2003 | CA | 2399658 A1 | 27-02-2003 |
| US 6296964 | B1 | 02-10-2001 | AU | 2426401 A | 09-07-2001 |
| | | | WO | 0148853 A1 | 05-07-2001 |
| DE 19905564 | A | 17-08-2000 | DE | 19905564 A1 | 17-08-2000 |
| | | | AU | 3146200 A | 29-08-2000 |
| | | | WO | 0048262 A1 | 17-08-2000 |
| DE 19853911 | A | 25-05-2000 | DE | 19853911 A1 | 25-05-2000 |
| | | | AU | 3030300 A | 13-06-2000 |
| | | | WO | 0031813 A1 | 02-06-2000 |
| EP 1235289 | A | 28-08-2002 | US | 2002119358 A1 | 29-08-2002 |
| | | | EP | 1235289 A2 | 28-08-2002 |
| | | | EP | 1380062 A1 | 14-01-2004 |
| | | | JP | 2002260690 A | 13-09-2002 |
| | | | JP | 2004522262 T | 22-07-2004 |
| | | | WO | 02069425 A1 | 06-09-2002 |
| | | | US | 2003124405 A1 | 03-07-2003 |
| EP 1107339 | A | 13-06-2001 | US | 6358642 B1 | 19-03-2002 |
| | | | CA | 2323124 A1 | 02-06-2001 |
| | | | EP | 1107339 A2 | 13-06-2001 |
| | | | JP | 3495698 B2 | 09-02-2004 |
| | | | JP | 2001167777 A | 22-06-2001 |

EPO FORM P0460

Pour tout renseignement concernant cette annexe : voir Journal Officiel de l'Office européen des brevets, No.12/82